# EUROPEAN PATENT SPECIFICATION

(11) **EP 2 326 129 B1**
(45) Date of publication and mention of the grant of the patent: **13.07.2016**
(21) Application number: 09290882.1
(22) Date of filing: 20.11.2009
(51) Int. Cl.: H04W 8/06, H04W 84/04, H04W 92/04

(54) **Allocating an IP subnet address in a local network comprising a plurality of devices and connected to the internet**
Zuteilung einer IP-Subnetz-Adresse in einem an das Internet angeschlossenen lokalen Netz mit mehreren Geräten
Attribution d'adresse de sous-réseau IP dans un réseau local connecté à Internet comportant plusieurs dispositifs

(43) Date of publication of application: 25.05.2011
(73) Proprietor: ALCATEL LUCENT, 92100 Boulogne-Billancourt (FR)
(72) Inventor: Howlett, James G., Bristol, BS16 5NA (GB); Parkinson, Richard B., Swindon Wiltshire, SN1 3LY (GB)
(74) Representative: Sarup, David Alexander

(56) References cited:
- WO-A1-2008/125729
- 3RD GENERATION PARTNERSHIP PROJECT: "Service requirements for Home NodeBs and Home eNodeBs (Release 9); 3GPP TS 22.220" 3GPP STANDARD, September 2009 (2009-09), XP050361158

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

The femtocell base station includes a radio frequency (RF) transceiver connected to an antenna for radio communications. Femtocell base stations are sometimes referred to as femtos.

One known type of Femtocell base station uses a broadband Internet Protocol (IP) connection as "backhaul", namely for connecting to the core network. One type of broadband Internet Protocol connection is Asynchronous Digital Subscriber Line (ADSL). An ADSL router connects the femtocell base station to the core network.

The IP connection allows both voice calls and data services provided via the femtocell base station to be supported.

In IP networks, nodes within the network have one or more IP addresses. These addresses are used to identify source and destination nodes of data packets. Data packets are sometimes referred to as datagrams. Each datagram includes a header containing the source and destination IP addresses, and the datagrams are routed through the network on the basis of those addresses.

Typically in IP networks the nodes are computers, sometimes referred to as "hosts" or "servers", which do not move. The routing of datagrams is managed automatically but is generally fixed for the duration of a particular data session, such as a web-surfing session.

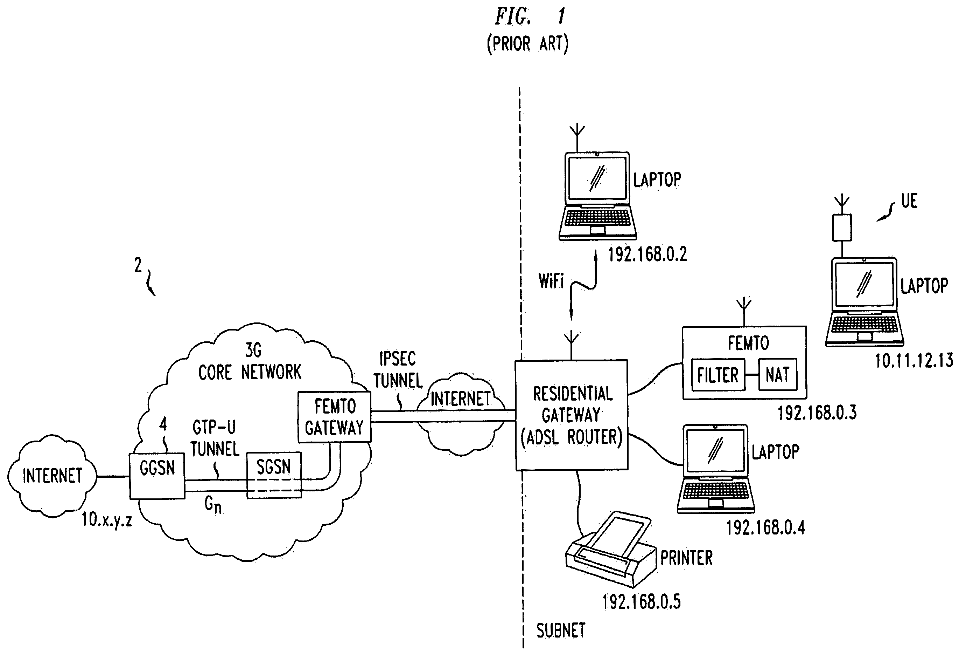

As shown in Figure 1, in a known network 2 for mobile telecommunications that involves IP, some of the nodes move. For example, mobile user terminals are IP hosts. A mobile user terminal is often denoted a user terminal or user equipment, UE. As shown in Figure 1, in order to provide an IP data connection to a user terminal UE, the mobile network provides a fixed connection point 4 for the user terminal and then tunnels datagrams to or from the user terminal from the fixed connection point. In a third generation partnership project, 3GPP, third generation, 3G, network, the fixed connection point 4 is a Gateway GPRS Support Node, GGSN, where GPRS denotes General Packet Radio System. This fixed connection point 4 has an IP address, of a format such as 10.x.y.z, as shown in Figure 1.

As is known, this IP address provided by the GGSN is used by the user terminal UE for communications with other nodes in the network. When the user terminal UE is connected via a femtocell base station ("femto"), the femto terminates the mobility tunnel that extends from the GGSN, and the user terminal uses the IP address of the fixed connection point, namely the GGSN.

Internet Protocol is a so-called Layer3 protocol, in which IP addresses have a structure. Specifically, IP addresses are in the form of a series of four numbers, each between 0 and 255.

As shown in Figure 1, all of the devices, such as the laptops, the printer and the femto, that are connected to the ADSL router, have IP addresses belonging to the same IP subnet. This is because the ADSL router which acts as a residential gateway, provides, in IP terms, Layer2 Network functionality. Being in the same IP subnet means that the devices have a number of the most significant digits of their respective IP addresses in common. In the example shown in Figure 1, the devices in that IP subnet all have addresses of the format: 192.168.0.x. These devices communicate directly with each other via the shared layer2 network node, namely the ADSL router, using their IP subnet addresses. These addresses directly relate to the Layer2, Medium Access Control, MAC, interfaces of these devices.

In this IP subnet, there are up to 254 addresses available, 192.168.0.1 to 192.168.0.254. The residential gateway uses one of these addresses for itself. The remainder are available to be assigned to respective devices in the IP subnet, which in this example can be considered as a residential IP network. These addresses are similar and belong to a single "Private IP" address range. These addresses have local significance only, so an IP router elsewhere is not able to route datagrams towards such a Private IP address. This means that devices in the residential IP network may initiate data connections with nodes in the Internet but may not be receive IP data communications.

In contrast, datagrams that are to be sent to a node in a different IP subnet are passed on by the ADSL router to a node in another Layer2 network on the path towards a destination node.

When a femto is deployed in the home, like other devices connected to the ASDL router, the femto is assigned a local IP subnet address. When a user terminal attached to the femto by radio has an active data session, the femto terminates the mobility tunnel that extends back to the fixed connection point, namely the GGSN. As the user terminal uses the IP address of the GGSN, of the format 10.x.y.z in this example, the user terminal is not in the same Layer2 network as the devices in the residential network. Accordingly, the user terminal is not in the same IP subnet as the ADSL router and the devices, including the femto, that are attached to the ADSL router. The user terminal then has an IP address which is not in the range of IP addresses (192.168.0.1 to 192.168.0.254 in this example) used in the residential network.

In consequence, the user terminal is not able to initiate a data connection with those devices. For example, the user terminal is unable to use local services such as share disk folders or use a local printer even though the printer is connect to the femto in the home.

To address this problem, it is known to make the femto itself a local IP fixed connection point so as to allow the user terminal to make use of the devices in the residential network. Two methods are known: one involving Network Address Translation (NAT) at the femto, and the other involves shifting the GGSN function to the femto. These are outlined in more detail below.

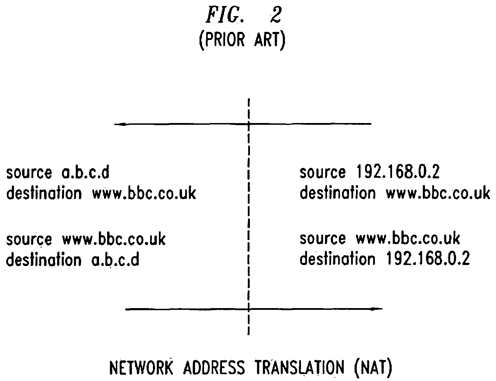

As shown in Figures 1 and 2, in Network Address Translation (NAT), the femto includes a filter that filters data traffic uplink from the user terminal to the 3G core network to identify datagrams having a source IP address which is in the local IP subnet. The femto also includes a NAT stage in which the source address is changed to that of the femto. Any datagram sent in response is then received by the femto, which changes the destination address in the received datagram to be the IP subnet address. In this case, the IP subnet address is that of the user terminal. This approach involves the femto keeping detailed records of which user terminals to send received datagrams to. Also as the filtering and address translation is not signalled to the 3G core network, an operator of the 3G core network is not able to control the process well, for example by controlling the femto on a per-request basis.

Another known alternative is shifting the GGSN function to the femto, so that the femto becomes an IP fixed connection point. This requires considerable changes to the signalling to the 3G core network, for example providing a Gn interface between the femto and Serving GPRS Support Node(SGSN).

Technical background is provided by 3rd GENERATION PARTNERSHIP PROJECT document: "Service requirements for Home NodeBs and Home eNodeBs (Release 9); 3GPP TS 22.220" 3GPP STANDARD, September 2009 (2009-09), XP050361158, section 5.7, and International (P.C.T.) Patent Publication WO2008/125729A1.

It is known from WO2008/125729A1 to provide a local network comprising a plurality of devices and connected to the Internet, the network being configured as a local IP subnet in which the devices each have a corresponding IP subnet address, one of the devices being a femtocell base station, wherein a user terminal which is connected to the femtocell base station is allocated an IP subnet address so as to be able to initiate communications with another of the devices in the local network.

### Summary

The present invention is characterised over the disclosure of WO2008/125729A1 in that the femtocell detects an Activate Packet Data Protocol Accept message in messages to the user terminal from the Internet, and amends that message by replacing the IP address with the local IP subnet address for the user terminal, and forwards the amended message to the user terminal.

The reader is referred to the appended independent claims. Some preferred features are laid out in the dependent claims.

Some preferred embodiments enable a user terminal connected to a femtocell base station that is connected in a local IP subnet to other devices, to communicate with those other devices. The other devices may include a local printer. The other devices may include a local storage device such as a server which is in the home and provides audio.

### Brief Description of the Drawings

Embodiments of the present invention will now be described by way of example and with reference to the drawings, in which:
Figure 1 is a diagram illustrating a known wireless communications network (PRIOR ART),
Figure 2 is a diagram illustrating the known process of Network Address Translation (PRIOR ART) used in the network of Figure 1,
Figure 3 is diagram illustrating a wireless communications network according to a first embodiment of the invention,
Figure 4 diagram illustrating one of the femtocell base stations shown in Figure 3, the femtocell base station including a subnet address assignor stage("mirror GGSN"), and
Figure 5 is a message sequence diagramming illustrating assignment of a subnet address to a user terminal by the femtocell base station shown in Figure 4.

### Detailed Description

We now describe a network including femtocell base stations then look in greater detail at the femtocell base station structure, and function, in assigning a subnet address to a user terminal attached to the femtocell base station.

### Network

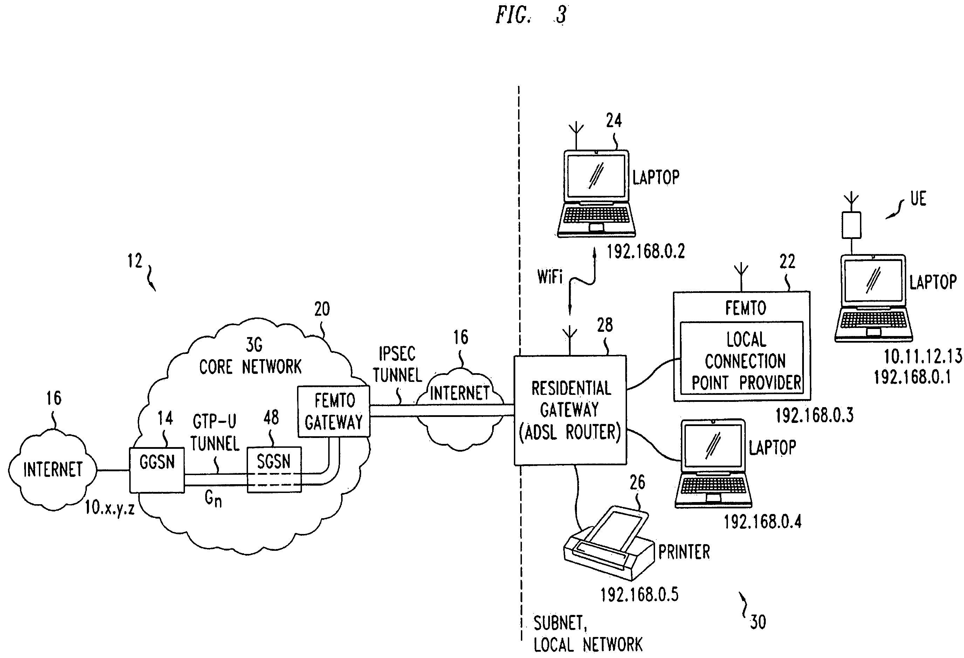

As shown in Figure 3, in a network 12 for mobile telecommunications that involves the Internet 16 and IP, some of the nodes move. For example, mobile user terminals are IP hosts. A mobile user terminal 18 is often denoted a user terminal or user equipment, UE. As shown in Figure 3, in order to provide an IP data connection to a user terminal UE, the 3G core network 20 provides a fixed connection point 14 for the user terminal and then tunnels datagrams to or from the user terminal from the fixed connection point. In a third generation partnership project, 3GPP, third generation, 3G, network, the fixed connection point 14 is a Gateway GPRS Support Node, GGSN, where GPRS denotes General Packet Radio System. This fixed connection point 4 has an IP address, of a format such as 10.x.y.z, as shown in Figure 3.

This IP address of the GGSN is used by the user terminal UE for communications with other nodes in the network. When the user terminal UE, 18 is connected via a femtocell base station ("femto") 22, the femto terminates the mobility tunnel that extends from the GGSN, and the user terminal 18 uses the IP address of the fixed connection point 14, namely of the GGSN, as source address in datagrams it sends and destination address in datagrams it receives.

Internet Protocol is a so-called Layer3 protocol, in which IP addresses have a structure. Specifically, IP addresses are in the form of a series of four numbers, each between 0 and 255.

As shown in Figure 3, the devices, such as the laptop 24, the printer 26 and the femto 22, that are connected to the ADSL router 28, have IP addresses belonging to the same IP subnet 30. The devices can be considered as nodes of a local network. The ADSL router 28 which acts as a residential gateway, provides, in IP terms, Layer2 Network functionality. Being in the same IP subnet 30 means that the devices 24,26,28 have a number of the most significant digits of their respective IP addresses in common. In the example shown in Figure 3, the devices in that IP subnet 30 all have addresses of the format: 192.168.0.x. These devices communicate directly with each other via the shared layer2 network node, namely the ADSL router, using their IP subnet addresses. These addresses directly relate to the Layer2, Medium Access Control, MAC, interfaces of the devices.

In this IP subnet, there are up to 254 addresses available, namely 192.68.0.1 to 192.68.0.254. The residential gateway 28 uses one of these addresses for itself. The remainder are available to be assigned to respective devices in the IP subnet 30, which in this example can be considered as a residential IP network. These addresses are similar and belong to a single "Private IP" address range. These addresses have local significance only, so an IP router (not shown) elsewhere is not able to route datagrams having such a Private IP address.

In contrast, datagrams that are to be sent to a node (not shown) in a different IP subnet are passed on by the ADSL router 28 to another Layer2 network node towards a destination node.

### Femtocell base station sometimes acts as local IP connection point

In use the GGSN 14 acts as an IP connection point. The femtocell base station 22 also acts as a local IP connection point. Signalling between the user terminal 18 and the 3G core network 20 goes via the femtocell base station 22. The femtocell reads and adapts the signalling messages so as to act as a local IP connection point.

Accordingly, in operation, the user terminal has two IP connection points. One is the GGSN in the 3G core network 20. The other is the femtocell base station. They are used in a somewhat complementary fashion. Although the IP connection point is established at the GGSN, the GGSN is not used as the connection point for the user terminal when the user terminal is within the femtocell with which the user terminal is registered. Instead, the femtocell is the IP connection point used for the user terminal when the user terminal, registered by the femtocell base station for possible connection with the femtocell base station, is inside the femtocell coverage area.

### Femtocell base station structure

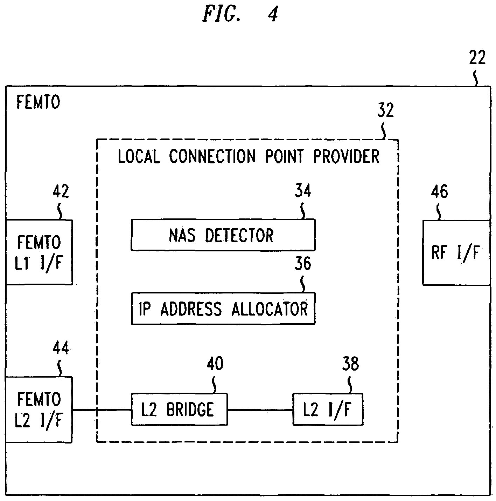

As shown in Figure 4, the femtocell base station 22 includes a local connection point provider 32 including a Non-Access Stratum (NAS) detector 32, an IP address allocator 36, a Layer2 interface 38 for the user terminal, and a Layer2 bridge 40. The femtocell base station also includes a Layer1 physical interface 42, the femto's own Layer2 interface 44 and a radiofrequency interface 46.

### NAS Detector

The NAS detector 32 monitors the Non-Access Stratum signalling between the user terminal 18 and the Serving GPRS Support Node (SGSN) 48/ GGSN 14 in the core network 2. This monitoring is sometimes referred to as snooping. This NAS signalling is used by the user terminal 18 to establish a data connection for use by applications such as a web browser at the user terminal 18.

The signalling includes a code for identifying as a fixed connection point the IP data network that the user desires to connect to. The code is an Access Point Name (APN). The femtocell base station 22 is configured to recognise a data connection request, namely an Activate PDP Context Request, that includes the APN and treat this as a request to access the local IP subnet. The femtocell base station 22 reserves the resources for that possible connection and forwards the Request to the 3G core network 20. In the core network 20, the SGSN 48/GGSN 14 apply the usual authentication and authorisation checks.

If the IP subnet named in the APN is one that the user terminal 18 is permitted to access, the SGSN48/GGSN14 accepts the Request. The femtocell base station 22 detects this acceptance and establishes the connection.

On the other hand, if the user terminal 18 is not permitted to access the IP subnet named in the APN, then SGSN48/GGSN14 declines the Request. The femtocell base station 22 detects this refusal and releases the resources.

### IP Address Allocator

This is a module in the femtocell base station that establishes an IP subnet connection point for the user terminal by allocating a IP subnet address to the user terminal. In this example, this is done using Dynamic Host Configuration Protocol (DHCP).

Effectively, the IP address allocator 36 acts as a DHCP client, and requests an IP address from the residential gateway 28, which acts as a DHCP server, in the local IP subnet 30.

### L2 interface

To fully participate in the local IP subnet, the user terminal interfaces with the femtocell base station at Layer2. Accordingly, the femtocell base station includes, for the user terminal, an interface 38 at Layer2, namely an Ethernet Media Access Control (MAC) function in this example.

The femtocell manages this interface 38 in a number of ways:
- Providing the interface 38 with a MAC address;
- Using Address Resolution Protocol (ARP) to provide a mapping function between the MAC address and the IP address;
- Providing Layer2 frame assembly for datagrams from the user terminal, specifically this includes providing the Layer2 MAC addresses of nodes within the local IP subnet to which the user terminal is sending the datagram, specifically, ARP is used to map destination IP address to destination Layer2 MAC address;

- Providing Layer2 disassembly for datagrams travelling to the user terminal; and
- Mapping Layer3 IP multicast/broadcast datagrams into Layer2.

### Laver2 bridge

As the femtocell base station 22 has only a single Layer1 physical interface 42 to the local IP subnet 30, a Layer2 bridge 40 is used to connect the femtocell's own Layer2 interface 44 to the Layer2 interface38 being maintained in the femto for the user terminal, and to the other nodes in the local IP subnet 30. Accordingly, the femtocell base station 22 and the user terminal 18 share the Layer1 physical interface 42.

### Operation in assigning an IP subnet address to the user terminal

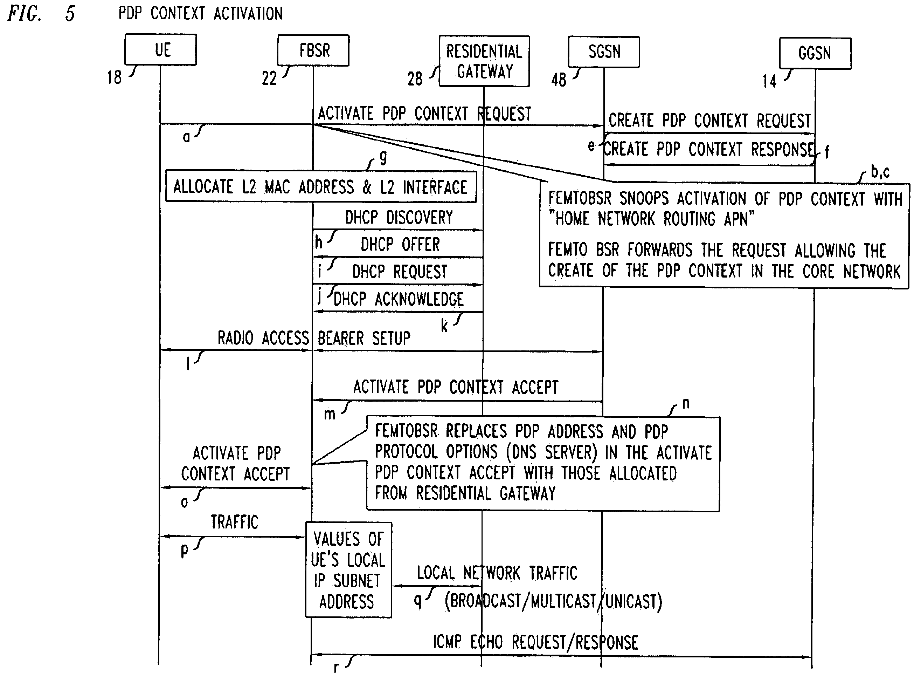

As shown in Figure 5, the message sequencing in assigning IP addresses includes assigning a local IP subnet address to a user terminal connected to the femtocell base station.

Firstly, the user terminal 18 sends (step a) an Activate PDP Context Request via the femto 22 and residential gateway 28 to the SGSN 48.

The femto snoops (step b) uplink NAS signalling messages so as to detect the Request. The Request includes the Access Point Name of the local IP subnet.

The femto records the Transaction Identifier and Network Service Access Point Identifier (NSAPI) included in the Request and forwards (step c) the Request to the SGSN 48.

The SGSN 48 identifies the user terminal's subscription and selects the appropriate Access Point Name (APN) connection point and selects the appropriate GGSN 14. The SGSN then formulates and sends (step e) a Create PDP Context Request to the GGSN 14.

The GGSN 14 responds (step f) by sending a Create PDP Context Response to the SGSN 48.

Next the femto allocates (step g), for the user terminal, a Layer2 interface instance 38 and a MAC address. The MAC address is added to a list in the Femto's own Layer2 interface 44 of those MAC addresses which are supported.

Next an IP address in the local IP subnet is allocated for the user terminal 18 by the IP address allocator 36 in the femto 22 by a series of messages involving DHCP between the femto 22 and the residential gateway 28. Specifically, a DHCP Discovery message is sent (step i) from the femto to the residential gateway which replies (step j) with a DHCP Offer message. The femto then sends (step j) a DHCP Request message to which the residential gateway replies with a DHCP Acknowledge message.

From then on the femto responds to requests for this IP address in the local IP subnet by providing the corresponding MAC address that is allocated to the user terminal.

A Radio Access Bearer, in other words a channel, is then set-up (step *l*) between the femto 22 and user terminal 18 under the control of the SGSN 48 which controls the femto 22. The SGSN 48 allocates a RAB identifier RAB_ID to the Radio Access Bearer. The RAB-ID is the NSAPI.

The SGSN 48 then returns (step m) an Activate PDP Context Accept message to the femto in respect of the user terminal 18.

The femto matches this Accept message to the corresponding PDP Context Request using the Transaction Identifier that it previously recorded. This Accept message is thus identified by the femto which then replaces (step n) the PDP IP address provided by GGSN 14 (that address being 10.11.12.13 in this example) with the local IP subnet address (192.168.0.6 in this example) being provided by the femto. By the way, other PDP Protocol settings included in the Accept message are also replaced by the femto, in particular an identifier of the server (not shown) beyond the GGSN that maps IP addresses to domain names.

The Accept message is then forwarded (step o) to the user terminal 18.

In consequence, the user terminal exchanges (step p) IP traffic with other nodes in the local IP subnet as the user terminal now has a local IP subnet address. This traffic sent (step q) is via the femto 22 and residential gateway 28. For example, the user terminal may listen to digital music data streamed from a local device in the home on the local IP subnet or print emails to a printer on the local IP subnet. The traffic is any of unicast, multicast, or broadcast traffic.

As the user traffic on this Radio Bearer is sent within the local IP subnet, special "keep alive" data is sent (step r) periodically in order to keep the mobility tunnel to the SGSN and GGSN alive. Specifically ICMP Echo Requests are sent to a server (not shown) beyond the GGSN via the associated Radio Access Bearer.

This example is specifically in respect of data service. In this example, voice call services are not affected.

### General

The above example relates to a 3GPP 3G network, however some other embodiments may relate to 2G, 4G, Long Term Evolution (LTE), WiMax or other types of wireless telecommunications networks.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A local network comprising a plurality of devices and connected to the Internet, the network being configured as a local IP subnet in which the devices each have a corresponding IP subnet address, one of the devices being a femtocell base station, wherein a user terminal which is connected to the femtocell base station is allocated an IP subnet address so as to be able to initiate communications with another of the devices in the local network,
**characterised in that** the femtocell detects an Activate Packet Data Protocol Accept message in messages to the user terminal from the Internet, and amends that message by replacing the IP address with the local IP subnet address for the user terminal, and forwards the amended message to the user terminal.

2. A local network according to claim 1, also comprising a local gateway to which each of the devices is connected, the gateway being connected to the Internet.

3. A local network according to claim 2, in which the femtocell base station in use obtains the IP subnet address for the user terminal from the local gateway.

4. A local network according to any preceding claim, in which the femtocell base station detects an Activate Packet Data Protocol request in messages from the user terminal for forwarding via the Internet, the detection of the request triggering the femtocell base station to request an IP subnet address for the user terminal.

5. A local network according to any of claims 2 to 4, in which the femtocell base station obtains the address by being a Dynamic Host Configuration Protocol, DHCP, client communicating with the gateway being a DHCP server.

6. A local network according to any preceding claim, in which for directing data packets, the femtocell base station responds to requests for the local IP address of the user terminal by providing the Medium Access Control, MAC, address of the user terminal.

7. A local network according to any preceding claim connected via the Internet to a telecommunications core network, in which data is periodically sent between the femtocell base station and the core network in respect of the session with the user terminal so as to keep the session alive in respect of the core network whilst the user terminal is communicating within the local network.

8. A local network according to claim 1, in which the user terminal connected to the femtocell base station is allocated the IP subnet address upon the user terminal being determined as within the femtocell of the femtocell base station in respect of which the user terminal is registered.

9. A method of allocating an IP subnet address in a local network comprising a plurality of devices and connected to the Internet, one of the devices being a femtocell base station,
the method comprising configuring the network as a local IP subnet in which the devices each have a corresponding IP subnet address,
allocating an IP subnet address to a user terminal which is connected to the femtocell base station so as to enable the user terminal to initiate communications with another of the devices in the local network
**characterised in that** the femtocell detects an Activate Packet Data Protocol Accept message in messages to the user terminal from the Internet, and amends that message by replacing the IP address with the local IP subnet address for the user terminal, and forwards the amended message to the user terminal.

10. A method according to claim 9, in which the femtocell base station detects an Activate Packet Data Protocol request in messages from the user terminal for forwarding via the Internet, and in consequence requests an IP subnet address for the user terminal.

11. A method according to claim 9 or 10, in which the local network is connected via the Internet to a telecommunications core network, in which data is periodically sent between the femtocell base station and the core network in respect of the session with the user terminal so as to keep the session alive in respect of the core network whilst the user terminal is communicating within the local network.

## Patentansprüche

1. An das Internet angeschlossenes, lokales Netz mit mehreren Geräten, wobei das Netz als lokales IP-Subnet konfiguriert ist, in welchem die Geräte jeweils eine zugehörige IP-Subnet-Adresse haben, wobei eines der Geräte eine Femtozellen-Basisstation ist, wobei einem Benutzerendgerät, welches mit der Femtozellen-Basisstation verbunden ist, eine IP-Subnet-Adresse zugewiesen wird, so dass sie imstande ist, in Kommunikation mit einem anderen der Geräte des lokalen Netzes zu treten,
**dadurch gekennzeichnet, dass** die Femtozelle unter den Nachrichten aus dem Internet an das Benutzerendgerät eine Nachricht des Typs Activate Packet Data Protocol Accept feststellt, diese Nachricht durch das Ersetzen der IP-Adresse durch die lokale IP-Subnet-Adresse für das Benutzerendgerät ergänzt und die ergänzte Nachricht an das Benutzerendgerät weiterleitet.

2. Ein lokales Netz nach Anspruch 1, weiterhin ein lokales Gateway umfassend, mit welchem jedes der Geräte verbunden ist, wobei das Gateway mit dem Internet verbunden ist.

3. Ein lokales Netz nach Anspruch 2, wobei die in Benutzung befindliche Femtozellen-Basisstation die IP-Subnet-Adresse für das Benutzergerät von dem lokalen Gateway erhält.

4. Lokales Netz nach einem jeglichen der vorgenannten Ansprüche, wobei die Femtozellen-Basisstation unter den per Internet weiterzuleitenden Nachrichten des Benutzerendgeräts eine Anfrage des Typs Activate Packet Data Protocol feststellt, wobei das Feststellen der Anfrage bei der Femtozellen-Basisstation das Anfragen nach einer IP-Subnet-Adresse für das Benutzerendgerät auslöst.

5. Lokales Netzwerk nach einem jeglichen der Ansprüche 2 bis 4, wobei die Femtozellen-Basisstation die Adresse erhält, indem ein Client des Typs Dynamic Host Configuration Protocol, DHCP, mit dem Gateway kommuniziert, wobei das Gateway ein DHCP-Server ist.

6. Lokales Netz nach einem jeglichen der vorgenannten Ansprüche, wobei die Femtozellen-Basisstation für das Leiten der Datenpakete auf Anfragen nach lokalen IP-Adressen des Benutzerendgeräts antwortet, indem sie die Adresse des Typs Medium Access Control, MAC, des Benutzerendgeräts zur Verfügung stellt.

7. Lokales Netz nach einem jeglichen der vorgenannten Ansprüche, über das Internet mit einem Telekommunikations-Kernnetzwerk verbunden, wobei zwischen der Femtozellen-Basisstation und dem Kernnetzwerk periodisch Daten bezüglich der Sitzung mit dem Benutzerendgerät gesendet werden, um die Sitzung bezüglich des Kernnetzwerks aufrechtzuerhalten, während das Benutzerendgerät innerhalb des lokalen Netzes kommuniziert.

8. Lokales Netz nach Anspruch 1, wobei dem mit der Femtozellen-Basisstation verbundenen Benutzerendgerät die IP-Subnet-Adresse zugewiesen wird, wenn das Benutzerendgerät als in der Femtozelle der Femtozellen-Basisstation befindlich bestimmt wird, in Bezug auf welche das Benutzerendgerät registriert wird.

9. Verfahren für die Zuweisung einer IP-Subnet-Adresse in einem mehrere Geräte umfassenden und an das Internet angeschlossenen, lokalen Netz, wobei eines der Geräte eine Femtozellen-Basisstation ist,
wobei das Verfahren das Konfigurieren des Netzes als lokales IP-Subnet umfasst, in welchem die Geräte jeweils eine entsprechende IP-Subnet-Adresse haben,
wobei eine IP-Subnet-Adresse einem Benutzerendgerät zugewiesen wird, welches mit der Femtozellen-Basisstation verbunden ist, so dass das Benutzerendgerät in die Lage versetzt wird, Kommunikationen mit einem weiteren der Geräte in dem lokalen Netz aufzunehmen,
**dadurch gekennzeichnet, dass** die Femtozelle unter den Nachrichten aus dem Internet an das Benutzerendgerät eine Nachricht des Typs Activate Packet Data Protocol Accept feststellt, diese Nachricht durch das Ersetzen der IP-Adresse durch die lokale IP-Subnet-Adresse für das Benutzerendgerät ergänzt und die ergänzte Nachricht an das Benutzerendgerät weiterleitet.

10. Verfahren nach Anspruch 9, wobei die Femtozellen-Basisstation unter den per Internet weiterzuleitenden Nachrichten des Benutzerendgeräts eine Anfrage des Typs Activate Packet Data Protocol feststellt und in Folge davon nach einer IP-Subnet-Adresse für das Benutzerendgerät anfragt.

11. Verfahren nach Anspruch 9 oder 10, wobei das lokale Netz über das Internet mit einem Telekommunikations-Kernnetzwerk verbunden ist, wobei zwischen der Femtozellen-Basisstation und dem Kernnetzwerk periodisch Daten bezüglich der Sitzung mit dem Benutzerendgerät gesendet werden, um die Sitzung bezüglich des Kernnetzwerks aufrechtzuerhalten, während das Benutzerendgerät innerhalb des lokalen Netzes kommuniziert.

## Revendications

1. Réseau local comprenant une pluralité de dispositifs et connecté à Internet, le réseau étant configuré comme un sous-réseau IP local dans lequel les dispositifs présentent chacun une adresse de sous-réseau IP correspondante, un des dispositifs étant une station de base de femtocellule, dans lequel on attribue à un terminal utilisateur qui est connecté à la station de base de femtocellule une adresse de sous-réseau IP afin de pouvoir déclencher des communications avec un autre des dispositifs dans le réseau local,
**caractérisé en ce que** la femtocellule détecte un message d'acceptation de protocole de données par paquets activé dans des messages destinés au terminal utilisateur depuis Internet, et modifie ce message en remplaçant l'adresse IP par l'adresse de sous-réseau IP local pour le terminal utilisateur, et transfère le message modifié vers le terminal utilisateur.

2. Réseau local selon la revendication 1, comprenant également une passerelle locale à laquelle chacun des dispositifs est connecté, la passerelle étant connectée à Internet.

3. Réseau local selon la revendication 2, dans lequel la station de base de femtocellule utilisée obtient l'adresse de sous-réseau IP pour le terminal utilisateur à partir de la passerelle locale.

4. Réseau local selon l'une quelconque des revendications précédentes, dans lequel la station de base de femtocellule détecte une demande de protocole de données par paquets activée dans des messages provenant du terminal utilisateur devant être transférés par Internet, la détection de la demande déclenchant la demande par la station de base de femtocellule d'une adresse de sous-réseau IP pour le terminal utilisateur.

5. Réseau local selon l'une quelconque des revendications 2 à 4, dans lequel la station de base de femtocellule obtient l'adresse en étant un client de protocole de configuration d'hôte dynamique, DHCP, communiquant avec la passerelle qui est un serveur DHCP.

6. Réseau local selon l'une quelconque des revendications précédentes, dans lequel pour diriger des paquets de données, la station de base de femtocellule répond aux demandes par le terminal utilisateur de l'adresse IP locale en fournissant l'adresse de contrôle d'accès au support, MAC, du terminal utilisateur.

7. Réseau local selon l'une quelconque des revendications précédentes connecté par Internet à un réseau central de télécommunication, dans lequel des données sont envoyées périodiquement entre la station de base de femtocellule et le réseau central par rapport à la session avec le terminal utilisateur de sorte à maintenir la session en activité par rapport au réseau central pendant que le terminal utilisateur communique dans le réseau local.

8. Réseau local selon la revendication 1, dans lequel on attribue au terminal utilisateur connecté à la station de base de femtocellule l'adresse de sous-réseau IP lorsque le terminal utilisateur est déterminé comme étant dans la femtocellule de la station de base de femtocellule par rapport à laquelle le terminal utilisateur est enregistré.

9. Procédé d'attribution d'une adresse de sous-réseau IP dans un réseau local comprenant une pluralité de dispositifs et connecté à Internet, un des dispositifs étant une station de base de femtocellule,
le procédé comprenant la configuration du réseau en tant que sous-réseau IP local dans lequel chaque dispositif présente une adresse de sous-réseau IP correspondante,
l'attribution d'une adresse de sous-réseau IP à un terminal utilisateur qui est connecté à la station de base de femtocellule de sorte à permettre au terminal utilisateur de déclencher des communications avec un autre des dispositifs dans le réseau local
**caractérisé en ce que** la femtocellule détecte un message d'acceptation de protocole de données par paquets activé dans des messages destinés au terminal utilisateur depuis Internet, et modifie ce message en remplaçant l'adresse IP par l'adresse de sous-réseau IP local pour le terminal utilisateur, et transfère le message modifié vers le terminal utilisateur.

10. Procédé selon la revendication 9, dans lequel la station de base de femtocellule détecte une demande de protocole de données par paquets activée dans des messages provenant du terminal utilisateur devant être transférés par Internet, et demande par conséquent une adresse de sous-réseau IP pour le terminal utilisateur.

11. Procédé selon la revendication 9 ou 10, dans lequel le réseau local est connecté par Internet à un réseau central de télécommunication, dans lequel des données sont envoyées périodiquement entre la station de base de femtocellule et le réseau central par rapport à la session avec le terminal utilisateur de sorte à maintenir la session en activité par rapport au réseau central pendant que le terminal utilisateur communique dans le réseau local.
